Europäisches Patentamt

European Patent Office

Office européen des brevets

(11) Publication number: **0 247 719**
**A2**

# EUROPEAN PATENT APPLICATION

(21) Application number: **87303312.0**

(22) Date of filing: **15.04.87**

(51) Int. Cl.4: **A23L 3/36** , A23L 3/16 ,
A23B 4/06 , A23B 4/00

(30) Priority: **18.04.86 GB 8609519**

(43) Date of publication of application:
**02.12.87 Bulletin 87/49**

(84) Designated Contracting States:
**AT BE CH DE ES FR GB GR IT LI LU NL SE**

(71) Applicant: **MORAN-DOUGLAS ENGINEERING LIMITED**
**Bro-Alun**
**Mold Clwyd North Wales(GB)**

(72) Inventor: **Moran, Arthur William**
**The Old Mill, Bontuchel**
**Nr. Ruthin, Clwyd, North Wales(GB)**

(74) Representative: **Stringer, David Hiram et al**
**GEOFFREY OWEN & COMPANY 76 Lower Bridge Street**
**Chester CH1 1RU(GB)**

(54) **Improvements relating to apparatus and methods of transferring heat.**

(57) The present specification discloses a heat transfer device (1) for use in transferring heat to or from a material. Conventionally material is heated or cooled from the outside so that the surface layer of the material is first cooled or heated and then thus forms a heat barrier to the further cooling or heating of the centre region of the material.

The heat transfer device (1) of the present invention provides an elongate hollow body (3), preferably in the form of a needle, with an elongate inner duct member (5) extending through said body (3). Heating or cooling fluid can be passed through the inner duct member (5) and back along the gap (15) between the body (3) and the inner duct member (5), and by piercing the relevant material, the material can be heated or cooled from the inside out. This thus reduces the heat barrier problem referred to and allows the heating or cooling to be effected relatively quickly and more efficiently.

# IMPROVEMENTS RELATING TO APPARATUS AND METHODS OF TRANSFERRING HEAT

The present invention relates to an apparatus and method of transferring heat.

In particular the present invention relates to an apparatus and method of transferring heat to or from an article to respectively heat or cool the article.

Considering first of all the case where an article is to be heated, e.g. cooking food in an oven, the article is normally placed in a heated environment, the outside region of the article being initially heated. Whilst the article will eventually be heated throughout provided it is left in the heated environment for a long enough period of time, the initially heated outside region acts as a barrier to further heat energy reaching the inner regions of the article, thus prolonging the heating period.

Similarly when cooling an article, e.g. freezing food or other material, the article is placed in a cooled atmosphere and the outside region of the article is first cooled forming a barrier to the extraction of heat from the inner regions of the article and thus prolonging the required cooling.

The aim of the present invention is to provide an apparatus and method for transferring heat to and from an article more quickly and efficiently than by using the prior art methods and apparatus.

According to one feature of the present invention there is provided a heat transfer device comprising an elongate hollow body which can be injected into a material to be heated or cooled, whether the material is solid, particulate or fluid, an inner elongate duct member extending within the body generally parallel to the longitudinal axis of the elongate body, said body having an opening towards one end thereof, which opening connects with the gap formed between the inside wall of the body and the outside wall of the inner elongate duct member, said inner elongate duct member being open at its end remote from said one end of the body to connect with said gap, and having a further opening leading to the outside of the device, said further opening being located in the region of said one end of the body.

In a preferred embodiment of this one feature of the present invention, the elongate hollow body is in the form of a hollow needle with said opening at the end region remote from the sharpened point of the needle. The inner duct member is fixed coaxially within the hollow body, the duct member being supported in the body at the end of the body remote from the sharpened end, and extending for the major part of the length of the body. In use, the needle is injected in the material to be heated or cooled, and a heat transfer fluid, i.e. liquid or gas, is passed through the needle between said opening and said further opening.

When the material is to be heated, e.g., cooked, hot water, steam or oil may be passed through said opening, along the annular gap between the inner wall of the body and the inner duct member, and through the inner duct member to said further opening. Alternatively the hot fluid may be passed in the reverse direction. Heat is thus transferred by the needle which is made of a heat conductive material, e.g. metal, from the hot fluid to the surrounding material to be heated. The material is thus heated, e.g. cooked, from within, improving heating, e.g. cooking, and reducing the required heating, e.g. cooking, time.

When a material is to be cooled, a cooling medium is passed through the needle. In the event that a liquid or gas is used as the cooling medium, e.g. liquid nitrogen, the fact that a closed circuit will be connected to the needle for the supply and collection of the gas, prevents the wastage of gas and the inefficient use of gas, as can happen with the use of a nitrogen tunnel. The gas may be recirculated through the needle a number of times to use its cooling qualities efficiently. To cater for the large expansion of such a gas as it is heated, the gas is preferably introduced into the needle via said further opening so that it first passes along the inner duct member and expands into the annular gap defined between the inner duct member and the inner wall of the elongate body. Preferably the annular gap has a larger volume than the inner duct member, to thus allow for the gas expansion. Then, when liquid nitrogen is used and is passed first along the inner duct member, the increase in volume as the liquid nitrogen enters the said annular gap allows the nitrogen to pass into its gaseous phase somewhat explosively, so that extra cooling is achieved due to the absorption of heat for the latent heat of vapourisation, this heat being drawn in via the outer wall of the needle.

It is envisaged that a plurality of heat transfer devices can be mounted on a support, the elongate bodies, i.e. needles, being arranged parallel to each other. Then by inserting the needles into, for example, a piece of meat, the meat can be cooked or frozen dependent upon whether a heating or cooling medium is passed therethrough. Whilst such a needle arrangement may have needles which are long enough to pass vertically completely through an article, e.g. piece of meat, this can prove difficult to detach from the article after heating or cooling. To simplify the subsequent detachment of an article, preferably shorter needles are provided on two supports, which penetrate the article from opposite sides. Thus a reduced force is required to detach the article from the shorter needles, as compared to the longer needle arrangement.

Alternatively, or in addition to the latter design, an electric current can be passed through the needles for a short period of time, to thus heat the needles sufficiently to melt any ice holding the needles to the material. This small heating operation may be effected briefly immediately before the needles are to be extracted.

According to a further feature of the present invention there is provided a method of transferring heat to or from a material, whether solid, particulate or fluid, comprising the steps of inserting a heat transfer device into the material and passing a heat transfer fluid through said device, the device comprising an elongate hollow body which has an opening towards one end thereof, which opening connects with a gap formed between the inside wall of the body and the outside wall of an inner elongate duct member which extends within the body generally parallel to the longitudinal axis of the elongate body, said inner duct member being open at its end remote from said opening to connect with said gap, and having a further opening communicating with the outside of the device, located in the region of said one end of the body.

In use, heated fluid can be passed through the heat transfer device to, for example, cook the material in which it is inserted. Alternatively, if a cooled fluid is passed through the heat transfer device, the material into which the device is inserted can be chilled or frozen effectively from the inside out. Thus, in either case heat energy is transferred to or from the inside of the material into which the device is inserted, thus obviating the resistance to heat transfer, which is usual in prior art arrangements due to the usual heat barrier initially produced in the outer region of the material in question.

One application of the present invention provides for a number of heat transfer devices in the form of needles, to be inserted into a solid rubber tyred wheel, whereby the rubber can be cooled to become brittle, by passing a cooling medium, e.g. liquid nitrogen, through the needles. The cooled brittle rubber can then be simply crushed to remove it from the hub of the wheel.

Another application of the present invention provides a meat press which is breach loaded; compressed boned-out pieces of meat being chilled or frozen by inserting a number of the heat transfer devices of the present invention in the form of needles, through apertures in the walls of the press into the meat, and passing a cooling medium, e.g. liquid nitrogen, therethrough. Preferably the needles are approximately half the thickness of the compressed meat, in length, and pads of parallel needles are inserted through apertures in the top and bottom walls of the press. Additionally or alternatively heat transfer needles according to the present invention may project from the piston of a ram which compresses the meat. After a suitable period of time the needles can be extracted, the end of the press opened, and the frozen piece of meat forced out. This meat can then be stored or sliced, the diameter of each needle being insufficient to affect the quality of the meat. If the meat is to be subsequently sliced, then preferably the needles are inserted into the meat generally parallel to the intended direction of slicing. In this way the meat quality is maximised. This application is especially suited for the process of forming and freezing bacon prior to slicing.

Still within the scope of the present invention, one or more needles may be injected into a mass of particulate material, e.g. a can of peas, and the material may then be heated or cooled, as required.

The present invention will now be further described, by way of example, with reference to the accompanying drawings, in which:-

Fig.1 is a diagrammatic cross-sectional view of a preferred embodiment of heat transfer device constructed according to the present invention;

Fig.2 is a perspective, diagrammatic view of a press for use in freeze forming, incorporating a number of the heat transfer devices of Fig.1; and

Fig.3 is a schematic illustration in cross-section, of a heating device incorporating a number of the heat transfer devices of Fig.1.

The heat transfer device constructed according to the present invention and illustrated in the accompanying drawings, is basically in the form of a needle 1 comprising an elongate hollow body 3 within which an elongate duct member 5 is mounted.

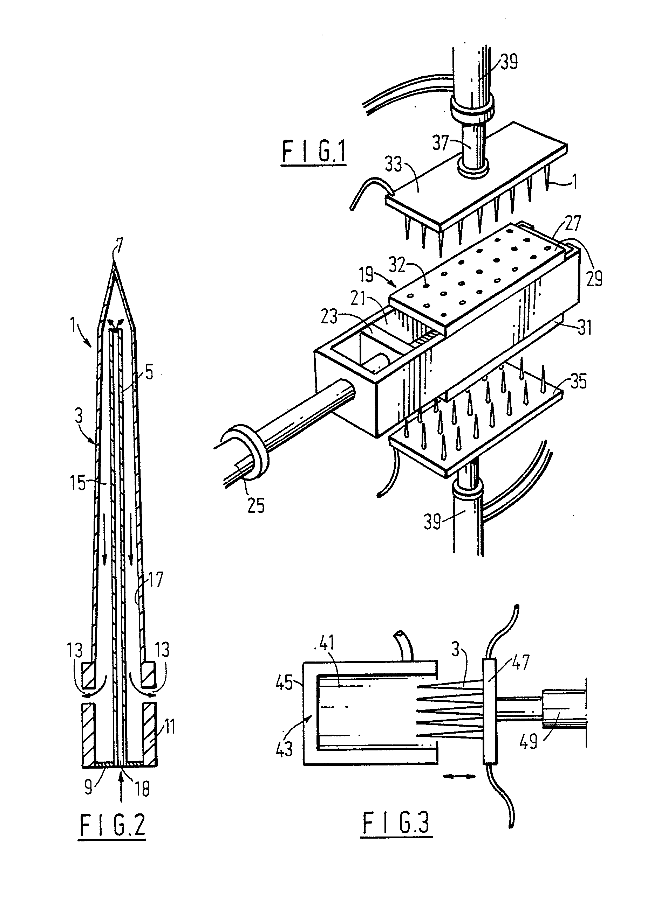

The hollow body 3 is generally cylindrical and thickened at one end region 9 whilst tapering at the other end to a point 7. Alternatively the hollow body 3 can have any desired cross-sectional configuration. Said one end region 9 of the hollow body 3 is thickened to provide a support region 11 which can be fixedly mounted, as desired, on a support - see the needle pads 33,35 in Fig.2. This support region 11 is provided with two lateral ports 13 which in normal use allow the annular gap 15 between the inner wall 17 of the hollow body 3 and the outer wall of the duct member 5, to communicate with the outside, e.g. to vent to the atmosphere or to connect with a closed circuit system (not shown).

The elongate duct member 5 is located coaxially within the hollow body 3 and is secured to the hollow body 3 at said one end region 9. This duct member 5 extends for nearly the full length of the hollow body 3 and is open at both ends, the end 18 adjacent to said one end region 9 of the hollow body 3 communicating with the outside, in the same manner as lateral ports 13.

The needle 1 illustrated in Fig.1 of the accompanying drawings is especially suited for use in cooling a material and for particular use with liquid nitrogen. The volume of the annular gap 15 is considerably larger than the internal volume of the duct member 5 through which the liquid nitrogen initially flows, and thus the liquid nitrogen is allowed to expand as it leaves the inner duct member 5, the liquid nitrogen passing to its gaseous phase and thereby absorbing the required latent heat of vaporisation and enhancing the cooling effect. In alternative embodiments, no such volume considerations may be necessarily made, and the cooling fluid can be passed in either direction, as desired.

Whilst the lateral ports 13 can vent to the atmosphere it is preferred that the cooling fluid is collected in a closed circuit and possibly recycled through the needle to gain the most efficient usage of the available cooling properties of the fluid.

The needle 1 illustrated in Fig.1 of the accompanying drawings can be used in many different chilling apparata. One such apparatus is shown diagrammatically in Fig.2, and is basically a press for compressing boned-out bacon pieces. The press comprises an elongate chamber 19 which can be breach-loaded with a bacon piece, via opening 21. Within the chamber 19 is a piston 23 which is displaceable along the chamber 19 by means of a double acting hydraulic ram 25. The end wall 27 of the chamber 19 remote from the ram 25 can be slid transversely to the longitudinal axis of the chamber 19 as and when desired, to allow the ram 25 to force a bacon piece out of the chamber 19.

The upper and lower faces 29,31 of the chamber 19 are provided with a series of small apertures 32 through which the needles 1 of needle pads 33,35 can pass to penetrate a bacon piece within the chamber 19. Each needle pad 33,35 is basically a manifold holding a plurality of needles parallel to each other, the manifold being designed to supply liquid nitrogen to the individual needles, and to vent the used gas away, possibly for recycling. The needle pads 33,35 are each supported on a piston rod 37 of a hydraulic double acting cylinder 39, so that activation of the cylinders 39 moves the needles into or out of the chamber 19.

In use with the needles 1 retracted out of the chamber 19 as illustrated, and with the piston 23 retracted, a bacon piece is first inserted through breach opening 21 into chamber 19. Then the ram 25 is activated to move piston 23 along chamber 19 and compress the bacon piece against end wall 27 and the other interior walls of the chamber 19, the bacon piece then adopting the desired configuration. Subsequently, double-acting cylinders 39 are activated to move the needles 1 through apertures 32 and into the bacon piece. Liquid nitrogen is then passed through the needles and after a predetermined period of time the cylinders 39 are re-activated to extract the needles. The end wall 27 is then slid aside allowing the piston 23 to move the frozen bacon piece out of the chamber 19. The process can then be repeated.

To aid the extraction of the needles from a frozen material, an electric current can be passed through each needle immediately prior to extraction, to thus briefly heat the needles and melt any adjacent ice which might impede extraction.

In a modified embodiment (not illustrated) of the press of Fig.2, further needles 1 can be mounted on the piston 23 to thus engage in the end of a bacon piece during compression. In this way the axial length of the needle pads 33,35 can be reduced so that the press can easily cater for a range of lengths of bacon pieces. Further, needles may additionally or alternatively be arranged to pas through the side walls of the chamber 19.

The heat transfer device of the present invention, such as illustrated in Fig.1 of the accompanying drawings, can be used to heat, e.g. cook, material, and a device suitable for cooking purposes is schematically illustrated in Fig.3. This device comprises a chamber 41 formed by a cylindrical jacket 43 through which a heated fluid, e.g. steam, can be passed. One end 45 of the chamber is closed and the other end can be closed by a closure member 47 which is movable axially of the chamber 41 by means of a ram 49. The closure member 47 carries a number of parallel needles 3, each of a construction similar to the needle of Fig.1. The needles 3 extend parallel to the longitudinal axis of the chamber 41 so that as the closure member 47 is moved to close the chamber 41, the needles pierce the material, e.g. meat, placed within the chamber 41. Heated fluid, e.g. steam, is then passed through the needles 3, the fluid preferably being first passed through said annular gap 15 and then along the inner duct member 5, to achieve the maximum heat transfer to the pierced meat in as short a time as possible. The meat can thus be cooked from the inside out, the heated jacket 43 containing the heat in the chamber 41 as well as adding heat to the outside of the meat

The present invention thus provides a simple method and apparatus by means of which a material can be efficiently heated or cooled uniformly throughout in as short a time as conceivably possible.

## Claims

1. A heat transfer device characterised by an elongate hollow body (3) which can be injected into a material to be heated or cooled, whether the material is solid, particulate or fluid, an inner elongate duct member (5) extending within the body (3) generally parallel to the longitudinal axis of the elongate body (3), said body (3) having an opening (13) towards one end (9) thereof, which opening (13) connects with the gap (15) formed between the inside wall of the body (3) and the outside wall of the inner elongate duct member (5), said inner elongate duct member (5) being open at its end remote from said one end (9) of the body (3) to connect with said gap (15), and having a further opening (18) leading to the outside of the device, said further opening (18) being located in the region of said one end (9) of the body (3).

2. A device as claimed in claim 1, wherein the elongate hollow body (3) is in the form of a hollow needle with said opening (13) at the end region (9) of said body (3), remote from the point (7) of the needle.

3. A device as claimed in claim 2, wherein the inner duct member (5) is fixed coaxially within the hollow body (3), the duct member (5) being supported on the body (3) at the end region (9) remote from the point (7) of the needle, and extending for the major part of the length of the body (3).

4. A device as claimed in any one of claims 1 to 3, wherein the volume of said gap (15) is greater than the volume of the inner duct member (5) within the body (3).

5. A plurality of heat transfer devices each as claimed in any one of claims 1 to 4, wherein said elongate hollow bodies (3) are mounted on a support (33, 35; 47) parallel to each other.

6. The plurality of heat transfer devices as claimed in claim 5, wherein said support (33, 35; 47) forms at least part of a wall of a chamber (21, 41), said support (33, 35; 47) being movable to open said chamber (21; 41).

7. The plurality of heat transfer devices as claimed in claim 6, wherein said chamber (21) forms part of a press (19).

8. The plurality of heat transfer devices as claimed in claim 6, wherein said chamber (41) forms part of a cooking device, the major part of the chamber being defined by a heated jacket (43).

9. A method of transferring heat to or from a material, whether solid, particulate or fluid, characterised by the steps of inserting a heat transfer device (1) into the material and passing a heat transfer fluid through said device (1), the device (1) comprising an elongate hollow body (3) which has an opening (13) towards one end (9) thereof, which opening (13) connects with a gap (15) formed between the inside wall of the hollow body (3) and the outside wall of an inner elongate duct member (5) which extends within the body (3) generally parallel to the longitudinal axis of the elongate body (3), said inner duct member (5) being open at its end remote from said opening (13) to connect with said gap (15), and having a further opening (18) communicating with the outside of the device (1), located in the region of said one end (9) of the body (3).

10. A method as claimed in claim 9, wherein the heat transfer fluid is a heated fluid which is fed into the hollow body (3) via said opening (13), said heated fluid passing along said gap (15) and then back along said inner duct member (5) to exit via said further opening (18).

11. A method as claimed in claim 10, wherein said heated fluid is selected from the group comprising steam, hot water and hot oil.

12. A method as claimed in claim 9, wherein the heat transfer fluid is a cooling fluid which is fed into said inner duct member (5) via said further opening (18), said cooling fluid passing along said inner duct member (5) and entering said gap (15) between the hollow body (3) and the inner duct member (5), and then along the body (3) through said gap (15), to exit via said opening (13).

13. A method as claimed in claim 12, wherein said cooling fluid is liquid nitrogen.

14. A method as claimed in claim 12 or 13, wherein said cooling fluid passes into a larger volume when it passes from the inner member (5) into said gap (15).

F I G.1

F I G.2

F I G.3